# EUROPEAN PATENT SPECIFICATION

(11) **EP 0 741 055 B1**
(45) Date of publication and mention of the grant of the patent: **31.10.2001**
(21) Application number: 96302624.0
(22) Date of filing: 15.04.1996
(51) Int. Cl.: B60N 2/22, B60N 2/36

(54) **Seat tilt mechanism**
Neigungsverstellungseinrichtung für eine Sitzlehne
Dispositif d'inclinaison pour siège

(30) Priority: 04.05.1995 GB 9509059
(43) Date of publication of application: 06.11.1996
(73) Proprietor: FORD MOTOR COMPANY LIMITED, Brentwood Essex (GB); FORD FRANCE S.A., 92506 Rueil-Malmaison Cédex (FR); FORD-WERKE AKTIENGESELLSCHAFT, 50735 Köln (DE)
(72) Inventor: Hughes, Alan Richard, South Woodham Ferrers, Essex CH3 5SN (GB)
(74) Representative: Messulam, Alec Moses

(56) References cited:
- EP-A- 0 211 248
- EP-A- 0 508 964
- DE-A- 3 045 309
- DE-A- 3 110 130
- FR-A- 2 710 883

## Description

The present invention relates to a seat tilt mechanism, and in particular to a manually operated rear seat tilt adjustment mechanism for a motor vehicle.

A rear seat tilt adjustment mechanism in a motor vehicle may be used to vary the incline angle of the back rest for the passenger's comfort. Such mechanisms may also adjust the seat back rest forward in order to increase the stowage space immediately behind the back of the seat.

A number of different manually operated arrangements are known from the prior art. In some cases, the rear seat tilt adjustment mechanism will also release the seat back, in order to allow the rear seat to fold down against the seat squab and so extend forward the rear stowage area.

In order to lessen the loading on the adjustment mechanism, particularly in the event of an accident, it is generally preferred to place the tilt adjustment mechanism higher on the seat, away from the seat pivot point.

An example of a known seat tilt adjustment is disclosed in DE-3045309, in which the seat back support has a pin which may be moved between ratchet positions by lifting the seat back upwards to disengage each ratchet position. After the forwardmost ratchet position, the seat back is free to fold forwards flat. Although the mechanism is very simple, involving no moving parts, the seat back is not locked into position, and may inadvertently shift or collapse forward, particularly in an accident.

More secure manually operated tilt mechanisms are disclosed in DE-3110130 and DE-3331472-A. These documents both describe a retractable pin which translates horizontally parallel to the seat back to engage within a recess on the vehicle body at the sides of the seat back. However, since in both cases the pins are attached to a control rod mechanism extending across and within the seat back, the seat design and padding must be fitted around the rod mechanism, which adds cost and complexity.

Another manual tilt mechanism with a control rod is disclosed in US-4068890, corresponding to the preamble of claim 1, in which a lock unit at the side of the seat engages with one of a number of strikers at different positions along the adjustment arc of the rear seat back. Since the strikers are fixed to the vehicle body and project inwardly toward the seat, the forward strikers will be exposed to the rear seat passenger when the seat back is reclined.

It is an object of the present invention to provide a manually adjustable rear seat tilt mechanism which is relatively simple and convenient to use and which is also secure and does not interfere with the internal construction of the seat back.

Accordingly, the present invention provides a tilt adjustment mechanism for a motor vehicle seat back support, the mechanism having a latch and a striker unit one of which is to be mounted on the vehicle and the other to be mounted on an upper lateral outward facing surface of the seat back support, characterised in that the striker unit has an arm which is rotatable to present a striker to be engaged with the latch at one of a number of tilt positions.

In a preferred arrangement, the latch is mounted on the upper lateral outward facing surface of the seat back support and the striker unit is mounted on the vehicle.

However, the positions of the striker arm and latch may be interchanged, with the striker arm mounted on the upper lateral outward facing surface of a rear seat, and the latch mechanism mounted on the vehicle.

In a preferred embodiment of the invention, the striker arm has a first striker and a second striker, the first striker having an axis which is substantially collinear with the axis about which the striker arm rotates. In this arrangement, it is also preferred if the first striker is engaged with the latch to set the tilt adjustment fully back.

It is often desirable to be able to fold the rear seat fully forward, in order to extend the vehicle stowage space. Hence, it is advantageous if the latch mechanism may be disengaged from a striker to allow the rear seat back support to collapse fully forward.

It is also desirable to prevent the rear seat back support from collapsing fully backward, particularly in the event of an accident. Hence it is advantageous if the latch mechanism may not be disengaged from a striker so that the rear seat back support may collapse fully backward.

The striker arm may rotate freely, but it is convenient once a striker has been disengaged from the latch mechanism if the arm may be rotated and held automatically in a position to allow another striker to be received by the latch. Accordingly, the striker arm may be arranged to rotate in contact with a means which provides enough friction to hold the arm in place during such engagement. In a preferred embodiment, the striker arm may be arranged to rotate next to a stationary indexing plate which has a locating feature adapted to locate with a matching feature on the striker arm to hold the arm in position for engagement of a striker with the latch.

In order that the rear seat may be held securely after the tilt adjustment, and may not inadvertently be released from that position, it is preferable if the latch is locked in engagement with the striker once the striker has been received by the latch. The engagement must first then be unlocked to release the striker, in order to alter the tilt of the rear seat back support.

The means for unlocking the latch may conveniently be provided by a lever handle which is attached to the latch, and extends upwards where it may readily be operated by hand.

The invention will now be described in further detail by way of example with reference to the accompanying drawings, in which:
Figure 1 is a side view of a tilt adjustment mechanism with a first embodiment of the striker unit showing the mechanism engaged with a motor vehicle seat in two tilt adjustment positions and disengaged to fold forwards;
Figure 2 is a side view of the striker arm component of the striker unit shown in Figure 1;
Figure 3 is a view of the striker arm shown in Figure 2 taken along line A-A';
Figure 4 is side view of the indexing plate of the striker unit shown in Figure 1;
Figure 5 is a view in cross section of the indexing plate shown in Figure 4 taken along line B-B', with mounting components for attaching the indexing plate and striker arm to the vehicle body;
Figure 6 is a side view of a second embodiment of the striker unit showing a striker arm, indexing plate and housing for mounting to the vehicle body; and
Figure 7 is a view in partial cross section of the striker unit shown in Figure 6 taken along line C-C'.

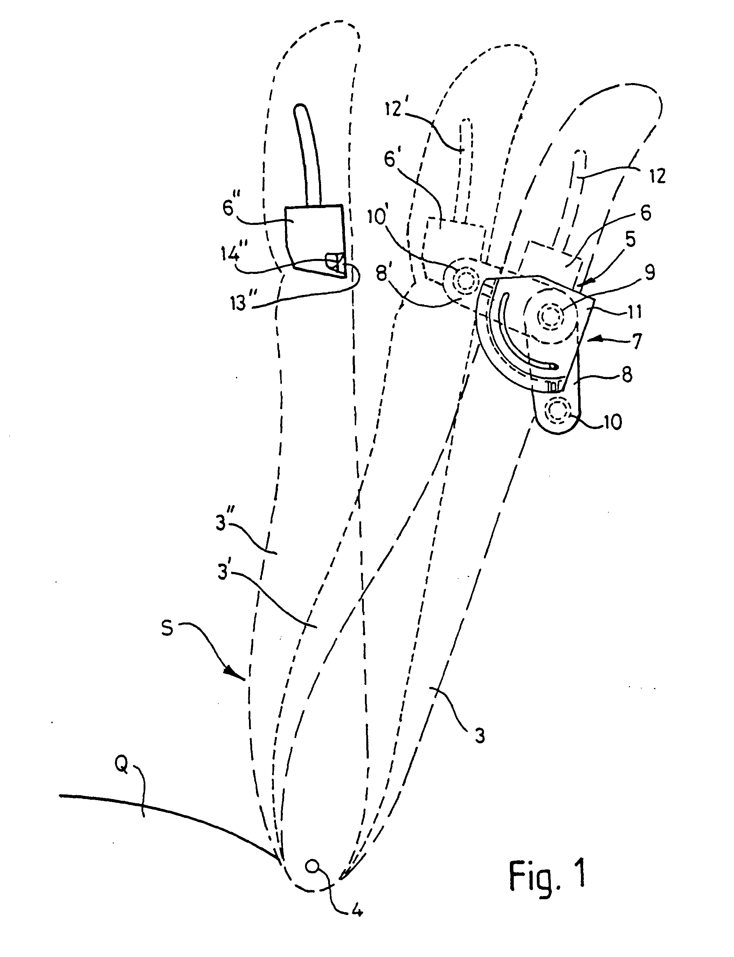

Referring now to Figure 1, a seat S has a squab Q and seat back support 3 which may tilt about a seat pivot 4. In the figure, the parts indicated with unprimed numbers are the parts for the seat back support 3 in the rearward orientation, the primed numbers are those same parts with the seat back support 3' in the forward orientation, and the double primed numbers are the same parts with the seat back support 3" ready to fold down against the seat squab Q.

A seat tilt adjustment mechanism 5 has a latch mechanism 6 mounted on the upper lateral surface of the seat 3, and a striker unit 7 mounted on the vehicle body. The vehicle body and parts for mounting the striker unit 7 to the body are not shown in Figure 1 for the sake of clarity. The striker unit has a pivotable striker arm 8 with, towards the ends of the arm, a pivot striker 9 and an end striker 10. The arm is pivotally mounted towards one end on the vehicle body and rotates against a fixed indexing plate 11 about an axis centered on the pivot striker 9 to move the end of the arm and the end striker 10 through more than 90° between a forward and a rearward tilt adjustment position. With the seat tilt in the rearward position, the pivot striker 9 engages with the latch 6, and with the seat in the forward position, the arm 8 is rotated forwards and the end striker 10' is engaged with the latch 6'.

In an alternative embodiment, not shown in the drawings, a forward and a rearward tilt adjustment may be achieved with a striker arm having just one striker - the end striker. The striker arm is pivotally mounted with a bolt which does not comprise a pivot striker, and is then rotated through approximately 180° in order to engage the end striker at either the forward or rearward tilt adjustment positions.

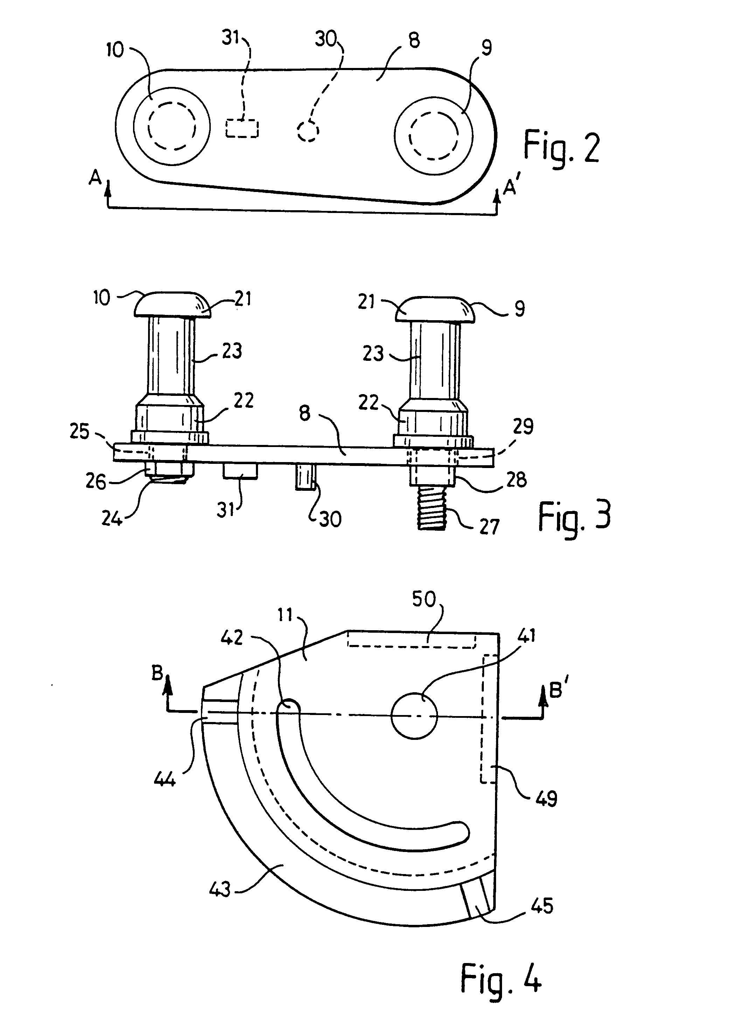

Referring now to Figures 2 and 3, the striker arm 8 is illustrated separate from the rest of the seat tilt adjustment mechanism 5, showing the two strikers 9,10 fixed through the arm 8.

Each striker 9,10 is generally cylindrical with a head 21 and base 22, with a post 23 therebetween which has a diameter less than that of the head and base. The end striker 10 has a threaded rod 24 which passes through an aperture 25 in the striker arm 8 and which is secured to the arm by a nut 26. The pivot striker 9 has a similar but longer threaded rod 27, which is surrounded over about half its length by a hollow cylindrical sleeve 28. The threaded rod 27 and sleeve 28 together pass through another aperture 29 in the striker arm 8.

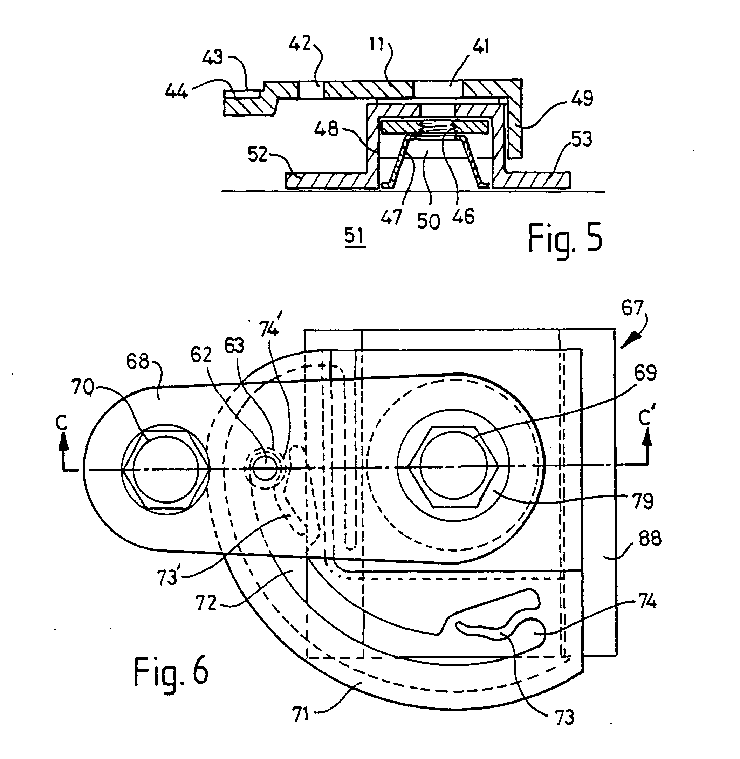

The sleeve 28 is long enough to pass through the aperture 29 in the arm and, referring now also to Figures 4 and 5, a pivot aperture 41 in the indexing plate 11.

The striker arm 8 also has on the side facing towards the indexing plate 11, a cylindrical guide pin 30, and locating stud 31 with a rectangular outline. The guide pin 30 passes through a guide pin aperture 42 in the indexing plate 11. This aperture is in the form of a section of an annulus, and extends across an arc of just over 90°. The ends of the guide pin aperture 42 limit the degree of swing of the guide pin 30 and hence of the striker arm 8.

The locating stud 31 rides in an annular recess 43 in the indexing plate and locates with either of two locating features 44,45 in the recess towards the end of the swing of the striker arm 8.

As can be seen from Figures 3 and 5, the striker unit is assembled when the threaded rod 27 with sleeve 28 of the pivot striker 9 are passed through the indexing plate pivot aperture 41, and the threaded rod is screwed onto a captive nut 46 held by a clip 47 within a housing 48. As the pivot striker 9 is screwed down, the sleeve 28 comes into contact with the housing 48, leaving sufficient clearance for the striker arm 8 to rotate about the sleeve 28.

Once the striker unit is assembled, the indexing plate 11 is prevented from moving about the pivot by two flanges 49,50 (see Figures 4 and 5) which extend at a right angle from the indexing plate, and at a right angle to each other, to rest against two sides of the housing 48.

The housing 48 is fixed to the vehicle body 51 by two side flanges 52,53 either by welding or bolting the flanges to the body. The housing is illustrated with open ends for the sake of clarity in the drawings, but these ends may, of course, be covered over to enclose the clip 47 and captive nut 46.

The protrusion of the locating stud 31 into the recess 43 is such that when the stud is between the locating features 44,45 the stud presses against the surface of the recess. There is enough compliance between the striker arm 8 and indexing plate 11 at this radius from the pivot striker 9 to allow the stud to slide readily along the recess 43 when the striker arm 8 is moved by hand between the forward and rearward positions. The surface of the recess 43 drops away from the locating stud 31 at the locating features 44,45 so that the stud engages with the recess at these positions and is restrained from moving unless a sufficient force is applied by hand to disengage the stud from the locating feature.

In operation, the seat tilt adjustment mechanism 5 works in the following way. Referring to Figure 1, if the mechanism is initially disengaged, as shown for the forwardmost seat back support 3", the mechanism may then be engaged in either the forward or rearward tilt position. The latch mechanism 6" has a jaw 13" with a pawl mechanism 14" which, when presented with a striker 9,10', automatically receives and locks the striker within the latch. To disengage the mechanism, the latch mechanism 6,6' has a disengaging handle 12,12', which when operated by hand unlocks the pawl mechanism and the engagement of a striker 9,10' within the latch, whereupon the seat back support may be tilted forwards. The striker arm 8,8' may then be rotated and located at the other tilt adjustment position, and then the seat back support 3,3' tilted backwards to engage with the striker arm and lock the seat back support in the new tilt position. Alternatively, the seat back support 3" may be folded down against the seat squab Q, and so extend forwards the vehicle stowage space.

It should be noted that the striker unit 7 is inherently robust. An accident may place great stress on the tilt adjustment mechanism 5, particularly if the seat S is occupied. Any force applied to the seat back support 3,3' will be transmitted through the latch mechanism 6,6' to a striker 9,10' and thence to the vehicle body 51.

With the seat back support 3 in the rearward position, the pivot striker 9 is engaged, and so this force is transmitted directly to the vehicle body 51, since the pivot striker is secured directly to the vehicle body by the housing 48.

With the seat back support 3' in the forward position, the end striker 10' is engaged, and so this force will be transmitted indirectly to the vehicle body 51 through the end striker 10' and the arm 8'. However, the force transmitted by the arm 8' will be in line with the arm. This is a robust arrangement, because there will be substantially no twisting force or rotational moment applied to the arm, which could cause the arm to buckle and disengage the striker from the latch.

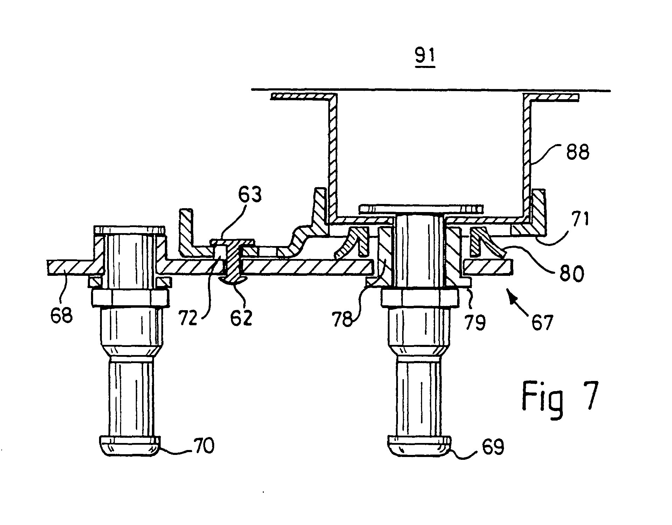

Referring finally to Figures 6 and 7, a second embodiment of the striker unit 67 may be seen showing the striker arm 68, indexing plate 71 and housing 88 for mounting to the vehicle body 91. The striker arm 68 has a pivot striker 69 and an end striker 70. The striker arm pivots about a sleeve 78 which has a flange 79 to retain the striker arm. About the sleeve and between the striker arm 68 and the housing 88 is a pivot washer 80 which is sprung to press the striker arm against the flange.

This arrangement differs from the first embodiment described above in that the functions of the locating feature and guide pin on the striker arm 68 are performed by a locating guide pin 62. This pin passes through the indexing plate 71 to ride in a guide pin aperture 72. The locating guide pin 62 is in the form of a rivet attached to the striker arm 68 at one end and with a flange 63 at the other end which extends beyond the edges of the guide pin aperture 72 to retain the locating guide pin, and hence the striker arm, against the indexing plate 71.

The guide pin aperture 72 limits the swing of the striker arm 68 between the two locating positions, and has two clip features 73,73' at each locating position to hold the striker arm in position. Each clip feature 73,73' is in the form of an arm which is roughly parallel to the guide pin aperture 72 and is attached to the indexing plate 71 at one end with the other end free to flex. The portion of each clip feature nearest the attached end of the clip has a clip recess 74,74' which holds the locating guide pin when the striker arm 68 is in position.

When the striker arm 68 is between the two locating positions, the locating guide pin 62 rides freely in the guide pin aperture 72 until it nears one of the two locating positions, whereupon it comes into contact with the free end of a clip feature 73,73'. As the striker arm is pushed towards a locating position, the locating guide pin 62 causes the clip feature to flex out of the way and press against the pin until pin reaches a clip recess 74,74', at which stage the flexed clip feature relaxes. The locating guide pin 62 is then held in place by the clip recess 74,74' and the striker arm 68 may not be moved further along the guide pin aperture 72, having reached the end of the aperture. The striker arm may readily be rotated out of the locating position by hand once enough force has been exerted to overcome the resistance needed to cause the clip feature 73,73' to flex out of the way of the locating guide pin 62.

Although not illustrated in the drawings, the striker arm may have a small handle or adjusting knob provided so that the striker arm may be moved without the need to touch the end striker, which may have collected oil or other contamination from the latch mechanism. Such a knob may be placed on the striker arm between the two striker pins, for example being coincident with the guide pin.

It is also not necessary for the striker arm to be pivotable through a full 90° or more, as drawn, if the side of the seat back support is spaced sufficiently from the striker arms so that the striker pin at the end of the striker arm does not interfere with the side of the seat when that end striker is not in use.

A seat tilt adjustment mechanism as described above is relatively simple to manufacture and to operate. The mechanism is particularly attractive, because it may be substituted in manufacture for an existing fixed striker used for a seat back support which may only be collapsed forward. An existing latch mechanism for a such a one-position seat therefore need not be modified for construction of a seat tilt mechanism according to the invention.

## Claims

1. A tilt adjustment mechanism (5) for a motor vehicle seat back support (3), the mechanism having a latch (6) and a striker unit (7) one of which is to be mounted on the vehicle (51) and the other to be mounted on an upper lateral outward facing surface of the seat back support (3), **characterised in that** the striker unit (7) has an arm (8) which is rotatable to present a striker (9,10) to be engaged with the latch (6) at one of a number of tilt positions.

2. A tilt adjustment mechanism according to Claim 1, in which the latch (6) is mounted on the upper lateral outward facing surface of the seat back support (3) and the striker unit (7) is mounted on the vehicle (51).

3. A tilt adjustment mechanism according to Claim 1 or Claim 2, in which the striker arm (8) has a first striker (9) and a second striker (10), the first striker (9) having an axis which is substantially collinear with the axis about which the striker arm (8) rotates.

4. A tilt adjustment mechanism according to Claim 3, in which the first striker (9) is engaged with the latch (6) when the tilt adjustment is set fully back.

5. A tilt adjustment mechanism according to any preceding claim, in which the latch (6) may be disengaged from the striker arm (8) to allow the seat back support (3) to collapse fully forward.

6. A tilt adjustment mechanism according to any preceding claim, in which the latch (6) may not be disengaged from the striker arm (8) so that the seat back support (3) may collapse fully backward.

7. A tilt adjustment mechanism according to any preceding claim, in which the striker arm (8) rotates next to a stationary indexing plate (11) which has a locating feature (44,45) adapted to locate with a matching feature (31) on the striker arm (8) to hold the arm in position for engagement of a striker (9,10) with the latch (6).

8. A tilt adjustment mechanism according to any preceding claim, in which the latch (6) is locked in engagement with the striker (9,10) once the striker has been received by the latch (6), and in which the engagement must be unlocked in order to alter the tilt of the seat back support (3).

9. A tilt adjustment mechanism according to Claim 8, in which the engagement is unlocked by a lever handle (12) attached to the latch (6).

10. A tilt adjustment mechanism according to any preceding claim, in which the seat back support (3) is for a rear seat.

## Patentansprüche

1. Ein Neigungs-Einstellmechanismus (5) für eine Motorfahrzeugsitz-Rückenstütze (3), wobei der Mechanismus eine Riegel (6)- und eine Anschlagseinheit (7) aufweist, von denen eine am Fahrzeug (51) zu montieren ist und die andere an einer oberen, seitlich nach außen weisenden Oberfläche der Sitz-Rückenstütze (3) zu montieren ist; **dadurch gekennzeichnet daß** die Anschlageinheit (7) einen Arm (8) aufweist, der drehbar ist um einen Anschlag (9, 10) an einer von einer Anzahl von Neigungspositionen für den Eingriff mit dem Riegel (6) darzubieten.

2. Ein Neigungs-Einstellmechanismus gemäß Anspruch 1, in welchem der Riegel (6) an der oberen, seitlich nach außen weisenden Oberfläche der Sitz-Rückenstütze (3) montiert ist und die Anschlageinheit (7) an dem Fahrzeug (51) montiert ist.

3. Ein Neigungs-Einstellmechanismus gemäß Anspruch 1 oder Anspruch 2, in welchem der Anschlagarm (8) einen ersten Anschlag (9) und einen zweiten Anschlag (10) aufweist, wobei der erste Anschlag (9) eine Achse aufweist, welche im wesentlichen kollinear mit der Achse ist, um welche sich der Anschlagarm (8) dreht.

4. Ein Neigungs-Einstellmechanismus gemäß Anspruch 3, in welchem der erste Anschlag (9) sich mit dem Riegel (6) in Eingriff befindet, wenn die Neigungseinstellung vollständig nach hinten gesetzt wird.

5. Ein Neigungs-Einstellmechanismus gemäß einem der vorstehenden Ansprüche, in welchem der Riegel (6) von dem Anschlagarm (8) ausgekuppelt werden kann, um es der Sitz-Rückenstütze zu erlauben nach vorne einzuknicken.

6. Ein Neigungs-Einstellmechanismus gemäß einem der vorstehenden Ansprüche, in welchem der Riegel (6) nicht von dem Anschlagarm (8) ausgekuppelt werden kann, so daß die Sitz-Rückenstütze vollständig nach hinten klappen kann.

7. Ein Neigungs-Einstellmechanismus gemäß einem der vorstehenden Ansprüche, in welchem der Anschlagarm (8) sich direkt an einer festen Schaltscheibe (11) dreht, welche ein Ausrichtemerkmal (44, 45) besitzt; das angepaßt ist um sich mit einem passenden Merkmal (32) auf dem Anschlagarm (8) auszurichten, um den Arm in einer Position für den Eingriff eines Anschlags (9, 10) mit dem Riegel (6) auszurichten.

8. Ein Neigungs-Einstellmechanismus gemäß einem der vorstehenden Ansprüche, in welchem der Riegel (6) im Eingriff mit dem Anschlag (9, 10) verriegelt ist, wenn der Anschlag einmal durch Riegel (6) aufgenommen wurde, und in welchem der Eingriff entriegelt werden muß, um die Neigung der Sitz-Rückenstütze (3) zu verändern.

9. Ein Neigungs-Eistellmechanismus gemäß Anspruch 8, in welchem der Eingriff durch einen an dem Riegel (6) angebrachten Hebelgriff (12) entriegelt wird.

10. Ein Neigungs-Einstellmechanismus gemäß einem der vorstehenden Ansprüche, in welchem die Sitz-Rückenstütze (3) für einen Rücksitz ist.

## Revendications

1. Mécanisme de réglage d'inclinaison (5) destiné à un support de dossier de siège de véhicule automobile (3), le mécanisme comportant un verrou (6) et une unité de taquets (7) dont l'un doit être monté sur le véhicule (51) et l'autre doit être monté sur une surface latérale supérieure faisant face vers l'extérieur du support de dossier de siège (3), **caractérisé en ce que** l'unité de taquets (7) comporte un bras (8) qui peut tourner pour présenter un taquet (9, 10) devant être mis en prise avec le verrou (6) au niveau de l'une d'un certain nombre de positions d'inclinaison.

2. Mécanisme de réglage d'inclinaison selon la revendication 1, dans lequel le verrou (6) est monté sur la surface latérale supérieure faisant face vers l'extérieur du support de dossier de siège (3) et l'unité de taquets (7) est montée sur le véhicule (51).

3. Mécanisme de réglage d'inclinaison selon la revendication 1 ou la revendication 2, dans lequel le bras à taquets (8) comporte un premier taquet (9) et un second taquet (10), le premier taquet (9) présentant un axe qui est pratiquement colinéaire de l'axe autour duquel le bras à taquets (8) tourne.

4. Mécanisme de réglage d'inclinaison selon la revendication 3, dans lequel le premier taquet (9) est en prise avec le verrou (6) lorsque le réglage d'inclinaison est réglé totalement à l'arrière.

5. Mécanisme de réglage d'inclinaison selon l'une quelconque des revendications précédentes, dans lequel le verrou (6) peut être désaccouplé du bras à taquets (8) afin de permettre au support de dossier de siège (3) de se rabattre totalement vers l'avant.

6. Mécanisme de réglage d'inclinaison selon l'une quelconque des revendications précédentes, dans lequel le verrou (6) ne peut pas être désolidarisé du bras à taquets (8) de sorte que le support de dossier de siège (3) puisse se rabattre totalement vers l'arrière.

7. Mécanisme de réglage d'inclinaison selon l'une quelconque des revendications précédentes, dans lequel le bras à taquets (8) tourne à proximité d'une plaque à transfert circulaire fixe (11) qui comporte une caractéristique de positionnement (44, 45) conçue pour se positionner avec une caractéristique correspondante (31) sur le bras à taquets (8) afin de maintenir le bras en position en vue d'une mise en prise d'un taquet (9, 10) avec le verrou (6).

8. Mécanisme de réglage d'inclinaison selon l'une quelconque des revendications précédentes, dans lequel le verrou (6) est verrouillé en prise avec le taquet (9, 10) une fois que le taquet a été reçu par le verrou (6), et dans lequel la mise en prise peut être déverrouillée de manière à modifier l'inclinaison du support de dossier de siège (3).

9. Mécanisme de réglage d'inclinaison selon la revendication 8, dans lequel la mise en prise est déverrouillée par une poignée de levier (12) fixée au verrou (6).

10. Mécanisme de réglage d'inclinaison de siège arrière selon l'une quelconque des revendications précédentes, dans lequel le support de dossier de siège (3) est destiné à un siège arrière.
